# EUROPÄISCHE PATENTSCHRIFT

(11) **EP 1 147 667 B1**
(45) Veröffentlichungstag und Bekanntmachung des Hinweises auf die Patenterteilung: **16.06.2004**
(21) Anmeldenummer: 99966968.2
(22) Anmeldetag: 15.12.1999
(51) Int. Cl.: H04N 7/24

(54) **LOKALES VIDEO- UND AUDIONETZWERK MIT OPTISCHER DATENLEITUNG**
LOCAL VIDEO AND AUDIO NETWORK WITH OPTICAL DATA LINE
RESEAU LOCAL AUDIO ET VIDEO AVEC LIGNE OPTIQUE

(30) Priorität: 18.12.1998 DE 19858493
(43) Veröffentlichungstag der Anmeldung: 24.10.2001
(73) Patentinhaber: XSYS Interactive Research GmbH, 78050 Villingen-Schwenningen (DE)
(72) Erfinder: SCHÖPP, Harald, D-76275 Ettlingen (DE); GEIGER, Erich, A., D-75236 Kämpfelbach (DE); TEICHNER, Detlef, D-78126 Königsfeld (DE)
(74) Vertreter: Westphal, Klaus, Dipl.-Ing.
(86) Internationale Anmeldenummer: PCT/EP1999/009954
(87) Internationale Veröffentlichungsnummer: WO 2000/038429

(56) Entgegenhaltungen:
- EP-A- 0 658 010
- EP-A- 0 841 817
- DE-A- 19 503 207
- US-A- 5 257 259

## Beschreibung

Die Erfindung betrifft ein lokales Netzwerk mit mehreren Teilnehmern, die miteinander mittels einer optischen Datenleitung zur Übertragung von Audio- und/oder Videodaten sowie Steuerdaten zu einem ringförmigen Netzwerk verbunden sind.

Es sind lokale Netzwerke mit mehreren Teilnehmern, die miteinander mittels einer optischen Datenleitung zur Übertragung von Audio- und/oder Videodaten sowie Steuerdaten zu einem ringförmigen Netzwerk verbunden sind beispielsweise aus der DE-A-19 503 207 und der EP 519 111 B1 bekannt. Dieses lokale Netzwerk zeigt mehrere Teilnehmer, von denen ein Teil Audio- oder Videodaten und Steuerdaten generieren und diese in das ringförmige Netzwerk einspeisen. Diese Teilnehmer werden als Datenquellen bezeichnet. Ein anderer Teil der Teilnehmer des Netzwerkes entnimmt aus dem Netzwerk die für sie bestimmten Daten, bringt sie zur Darstellung, das einerseits eine akustische Wiedergabe sein oder auch eine optische Wiedergabe sein kann. Bei diesen Teilnehmern spricht man von sogenannten Datensenken. Bei dem bekannten lokalen Netzwerk sind verschiedene Datenquellen wie beispielsweise Autoradio, CD-Player, DVD-Player oder auch TV-Tuner vorgesehen, welche ihre Daten unkomprimiert über die optische Datenleitung an die entsprechende Datensenke, das kann beispielsweise ein Autoverstärker sein, an den mehrere Lautsprecher angeschlossen sind, oder ein Bildschirm sein, der das nichtkomprimierte FBAS-Videosignal zur Darstellung bringt. Ein derartiges Netzwerk kann nur recht wenige Teilnehmer aufnehmen, welche unabhängig voneinander und damit teilweise gleichzeitig ihre Daten in das Netzwerk geben bzw. aus diesem herausziehen, da die Übertragungskapazität des Netzwerkes über die Datenleitung begrenzt ist.

Weiterhin sind Einzelgeräte bekannt, die am Beispiel eines Fernsehers, in einem Gehäuse einen TV-Tuner und eine Bildröhre aufweisen und die über eine Datenleitung miteinander verbunden sind, wobei über die Datenleitung die Videosignale unkomprimiert beispielsweise als FBAS-Signal übertragen werden und mit Hilfe der Bildröhre dargestellt werden. Daneben sind aber auch Gerätekombinationen bekannt, beispielsweise ein DVD-Player im mit einem Fernsehgerät. Bei dieser Kombination werden die auf der Digital-Video-Disk (DVD) gespeicherten komprimierten Daten, die sind u.a. nach dem MPEG-2 Standard codiert, ausgelesen und durch einen entsprechenden MPEG-2 Decoder im DVD-Player decodiert und damit dekomprimiert und als dekomprimierte Daten über Verbindungsleitungen zu dem standardisierten Fernsehgerät übertragen, welches diese dekomprimierten Daten, beispielsweise als FBAS-Signal, entsprechend den durch den TV-Tuner empfangenen Videodaten mittels der Bildröhre wiedergibt.

Der Erfindung liegt die Aufgabe zugrunde, ein lokales Netzwerk insbesondere für automotive Anwendungen zu schaffen, welches einerseits die maximale Übertragungskapazität besser ausnutzt und dabei möglichst kostengünstig ist.

Diese Aufgabe wird erfindungsgemäß durch ein lokales Netzwerk mit den Merkmalen des Anspruchs 1 gelöst.

Vorteilhafte Weiterbildungen ergeben sich aus den Unteransprüchen.

Das erfindungsgemäße lokale Netzwerk, welches ideal geeignet ist, in einem Automobil realisiert zu werden, zeigt nun eine Übertragung von Autodaten und Videodaten in komprimierter Form über die Datenleitung und einen bei der betreffenden Datensenke zentral angeordnete einmaligen Bit-Stream-Decoder zur Dekomprimierung der ihm zugeführten Audio- bzw. Videodaten. Damit wird es möglich, bei den verschiedenen Datenquellen auf die bisher enthaltenen Decoder zu verzichten beispielsweise auf den Bit-Stream-Decoder im DVD-Player, der hier für die Videodaten als MPEG2-Decoder ausgebildet ist. Sollen in einem Netzwerk beispielsweise mehrere derartige Datenquellen angeordnet werden, so ist es nun möglich auf diese Vielzahl von Bit-Stream-Decoder in den einzelnen Datenquellen zu verzichten und dadurch die Kosten für das Netzwerk mit seinen Teilnehmern zu senken. Allein bei der betreffenden Datensenke ist ein einziger Bit-Stream-Decoder für die Dekomprimierung der entsprechenden Videodaten oder auch Audiodaten vorgesehen, so daß typischerweise eine Reduktion der Decoderkomponenten, welche sehr aufwendige und kostenintensive integrierte Schaltkreise darstellen, auf das notwendige Mindestmaß gegeben ist. Durch diese neue Realisierung der einzelnen Komponenten, d. h. die Datenquellen können nun ohne eigenen Bit-Stream-Decoder für die Dekomprimierung der Daten auskommen und durch die Zuordnung eines derartigen Bit-Stream-Decoders zentral zu der relevanten Datensenke, ist eine neue verbesserte Aufteilung der einzelnen Bestandteile der einzelnen Teilnehmer im Netzwerk realisiert, die zum einen eine verbesserte Ausnutzung der zur Verfügung stehenden Datenübertragungskapazität des Netzwerkes aufgrund der Übertragung von komprimierten Daten anstelle von dekomprimierten Daten ermöglicht und zum andern eine deutliche Reduktion der Gesamtkosten des Netzwerkes ermöglicht. Dabei können die verschiedenen Datenquellen jeweils zu Lasten der Datensenken kostengünstiger realisiert werden, da bei diesen auf den kostenintensiven Bit-Stream-Decoder verzichtet werden kann. Da regelmäßig eine merklich höhere Anzahl an Datenquellen in einem erfindungsgemäßen lokalen Netzwerk vorhanden sind, als Datensenken vorhanden sind, führt dies zu der zuvor erwähnten deutlichen Kostensenkung.

Nach einer bevorzugten Ausführungsform der Erfindung ist die Datensenke mit dem Bit-Stream-Decoder von den Datensenken getrennt ausgebildet, wodurch alle der Datensenke zugeführten komprimierten Audio- oder Videodaten über die optische Datenleitung zugeführt werden, was den Schaltungsaufwand in der Datensenke merklich verringert, was zu einer weiteren Kostensenkung eines Netzwerkes mit einer derartigen Datensenke führt. Damit ist auch sichergestellt, daß alle der Datensenke zugeführten komprimierten Daten gleich behandelt werden und keine Bevorzugung von parallel eingespeisten Audio- oder Videodaten stattfindet. Eine besonders vorteilhafte Ausbildung der Erfindung zeigt die Möglichkeit, daß mit Hilfe der über die Datenleitung übertragenen Steuerdaten die Datenverbindung zwischen den Datenquellen und der Datensenke mit dem Bit-Stream-Decoder gesteuert werden. Damit ist ein sicherer Aufbau der Datenverbindungen, die Zuordnung der Datensenke zu den Datenquellen wie auch eine Steuerung der Art der Dekomprimierung möglich. Insbesondere hat es sich bewährt, mit Hilfe der übertragenen Steuerdaten den Bit-Stream-Decoder zwischen mehreren Decoder-Funktionsweisen umzuschalten. Dadurch können durch einen einzigen Bit-Stream-Decoder mehrere komprimierte Datenformate gelesen werden und je nach Bedarf, d. h. je nach dem verwendeten komprimierten Datenformat der Datenquelle ein entsprechender Schaltzustand des Bit-Stream-Decoders gewählt werden und die Daten in diesem komprimierten Datenformat korrekt mit der gewählten Decoderfunktion dekomprimiert werden. Dabei hat es sich bewährt, einen Decoder für die Videodatenkomprimierungsformate vorzusehen, welche typischerweise das MPEG-1-Format, das MPEG-2-Format wie auch das JPEG-Format umfaßt. Auf entsprechende Weise wurde ein Bit-Stream-Decoder vorgesehen, der für die Dekomprimierung der verschiedenen Audio-Kompressions-Formate (z.B. AC-3, MPEG-1 und MPEG-2) umschaltbar ausgebildet ist. Damit kann die Anzahl der erforderlichen Bit-Stream-Decoder weiter reduziert werden. Es hat sich bewährt, auf eine Zusammenfassung von Decoder für komprimierte Audiodaten und für komprimierte Videodaten zu verzichten, da die darin verwendeten Komprimierverfahren sowie die Datenstrukturen für die Audio- bzw. die Videodaten zu unterschiedlich sind und die Audio-Bit-Stream-Decoder und die Video-Bit-Stream-Decoder nur unter sehr hohem Organisations- und damit Kostenaufwand zusammengefaßt werden können, der den theoretischen Kostenvorteil der weiteren Decoderreduktion bei weitem aufhebt.

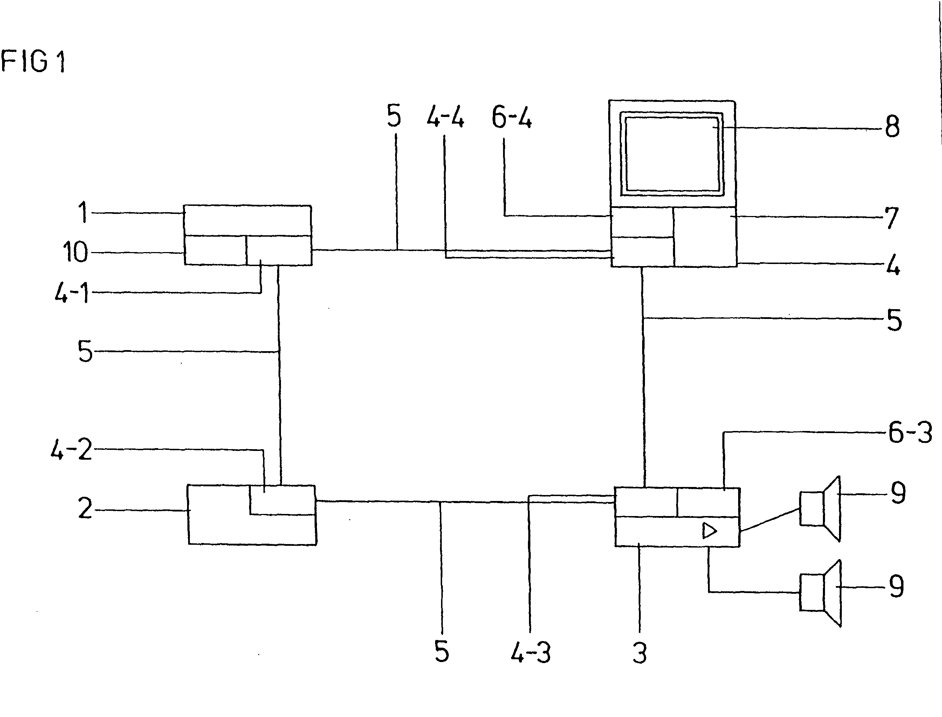

Ein bevorzugtes Ausführungsbeispiel der Erfindung ist in der Figur 1 dargestellt und wird im folgenden näher beschrieben.

Das lokale Netzwerk zeigt vier Teilnehmer 1, 2, 3, 4, welche über eine optische Datenleitung 5 miteinander ringförmig verbunden sind. Jeder Teilnehmer 1, 2, 3, 4 zeigt ein Interface 4-1, 4-2, 4-3, 4-4 mit jeweils zwei Anschlüssen zu der optischen Datenleitung 5.

Der Teilnehmer 1 stellt ein Autoradio dar und bildet eine Datenquelle. Diese Datenquelle 1 empfängt ein Runkfunksignal und gibt dieses entweder als unkomprimierte Audiodaten über sein Interface 4-1 an die Datenleitung 5 und damit an das Netzwerk zur Übertragung an die zugeordnete Datensenke weiter oder die Audiosignale des Runkfunkprogramms werden in einem integrierten Bit-Stream-Encoder 10 zugeführt, der die Audiosignale in komprimierte Autodaten wandelt und diese über das Interface 4-1 an die optische Datenleitung 5 überträgt. Als geeignetes Codierungsformat hat sich für Audiosignale das AC-3-Format herausgestellt.

Neben den Audiodaten des Autoradios 1 werden auch Steuerdaten an die optische Datenleitung übertragen, die die richtige Zuordnung der Audiodaten zu der korrekten Datensenke, das ist der Teilnehmer 3, sicherstellt. Daneben wird auch mit Hilfe eines entsprechenden Steuersignals sichergestellt, daß die Datensenke 3 die eingehenden Daten, soweit sie als AC-3 komprimierte Daten übertragen wurden, dem entsprechenden AC-3-Bit-Stream-Decoder zuführt, welcher die Dekomprimierung der Daten sicherstellt. Damit wird erreicht, daß bei einer nichtkomprimierten Übertragung von Audiodaten durch das Autoradio 1 an die Datensenke 3 der Bit-Stream-Decoder 6-3 nicht in Funktion tritt.

Die Datensenke 3 erhält einen Audioverstärker, der über ein Interface 4-3 mit der optischen Datenleitung 5 verbunden ist und über diese Datenleitung 5 die an ihn gerichtete Audiodaten erhält. Abhängig von den neben den Audiodaten übertragenen Steuerdaten wird die weitere Audioverarbeitung der Audiodaten im Verstärker 3 vorgenommen. Diese Verarbeitung umfaßt beispielhaft eine Equalisierung, eine Beaufschlagung mit einem Delay oder eine Signalverstärkung, wobei diese Verarbeitungen mittels der über das Netzwerk übertragene Steuerdaten gesteuert werden. Im dargestellten Beispiel werden also beispielhaft komprimierte Audiodaten im AC-3-Format von dem Autoradio 1 über die optische Datenleitung 5 über den Teilnehmer 2 an den Verstärker 3 übertragen und in diesem durch den AC-3-Bit-Stream-Decoder 6-3 decodiert und damit dekomprimiert und anschließend u.a. verstärkt und anschließend an die an den Verstärker 3 angeschlossene Lautsprecher 9, von denen beispielhaft zwei Stück dargestellt sind, weitergeleitet.

Neben dem Autoradio 1 existiert eine zweite Datenquelle 2, welche einen DVD-Player darstellt. Dieser DVD-Player kann von der DVD sowohl Audio- als auch Videodaten in komprimierter Form abspielen und diese Audio- und Videodaten ohne jegliche weitere Bearbeitung im Sinne einer Dekomprimierung an sein Interface 4-2 zur Weiterleitung der Daten an die Datenleitung 5 geben. Damit wird deutlich, daß der DVD-Player 2 auf jegliche Art von Bit-Stream-Decoder verzichten kann, denn zum einen sollen die Audio- und Videodaten in komprimierter Form über die Datenleitung 5 übertragen werden und zum anderen ist zur Wiedergabe der Audio- und Videodaten ein entsprechender Decoder zentral in der Datensenke 3, 4 angeordnet. Damit kann der DVD-Player 2 auf die aufwendigen integrierten Schaltkreise zur Decodierung der Audiodaten, die hier im AC-3-Format vorliegen, und der Videodaten, welche hier als MPEG 2-Daten vorliegen, verzichten, was sich unmittelbar in Form eines deutlich reduzierten Gerätepreises für den DVD-Player niederschlägt.

Die unveränderten komprimierten Audio- und Videodaten des DVD-Players 2 werden an die entsprechenden Datensenken, das kann einerseits der zuvor beschriebene Verstärker 3 als auch die Bildschirmeinheit 4 sein. Als Datensenke für die Videodaten kommt nur die Bildschirmeinheit 4 in Betracht. Diese zeigt ein Interface 4-4, über das sie mit der Datenleitung 5 eingangsseitig und ausgangsseitig verbunden ist, einen MPEG-2-Decoder 6-4, der die an die Bildschirmeinheit 4 übertragenen MPEG-2-codierten Videodaten decodiert und damit dekomprimiert und sie beispielsweise als nichtkomprimierte RGB-Signale dem TFT-Display zur Wiedergabe der Videodaten zur Verfügung stellt. Weiterhin zeigt die Bildschirmeinheit 4 eine Steuereinheit 7, die einerseits die Bildschirmeinheit 4 steuert, wobei sie insbesondere die Videodatenwiedergabe auf dem Bildschirm 8 beispielsweise deren Helligkeit, deren Kontrast; deren Farbe regelt und auch den Bit-Stream-Decoder 6-4 in seiner Funktionsweise dem Format der zugeführten Videodaten anpaßt. Damit kann einerseits der Bit-Stream-Decoder ausgeschaltet werden, wenn nichtcodierte Videodaten übertragen werden oder es kann eine entsprechende Decodierungsfunktion des Bit-Stream-Decoders entsprechend dem ankommenden Format beispielsweise MPEG-1-, MPEG-2- oder JPEG-Format gewählt werden. Beispielsweise sind die MPEG-2-Decoder ohne Probleme in der Lage als MPEG-1-Decoder zu arbeiten.

Daneben ist es möglich, daß die Steuerung 7 nicht nur die Bildschirmanzeigeeinheit 4 steuert, sondern auch die Steuerung des lokalen Netzwerks und hier insbesondere die Steuerung der Datenkanäle für die Übertragung der Audio- und/oder Videodaten zwischen der jeweiligen Datenquelle und der jeweiligen Datensenke durchführt.

Die komprimierten Audiodaten des DVD-Players 2 werden über die optische Datenleitung 5 abhängig von der Steuerung 7 entweder dem Verstärker 3 oder der Bildschirmeinheit 4 zugeführt, welche integrierte Lautsprecher im Bildschirmgehäuse zeigt. Wir gehen beispielhaft davon aus, daß die Steuerung 7 eine akustische Wiedergabe der Audiodaten durch die Verstärkereinheit 3 eingestellt hat. In diesem Fall werden die komprimierten Audiodaten über die optische Datenleitung 5 von dem Interface 4-3 des Verstärkers 3 aufgenommen, dem AC-3-Bit-Stream-Decoder 6-3 zugeführt, der die Decodierung und damit die Dekomprimierung der komprimierten Audiodaten vornimmt und die nicht komprimierten Audiodaten anschließend der Verstärkerstufe des Verstärkers 3 zuführt. Nach der Verstärkung der Audiosignale werden diese den Lautsprechern 9 zugeführt.

Dieses lokale Netzwerk zeigt also, wie bei den Datenquellen 1, 2 auf jeglichen Bit-Stream-Decoder verzichtet werden kann und die Bit-Stream-Decoder 6-3, 6-4 den Datensenken 3, 4 zugeordnet werden, welche für die Wiedergabe der Audio- oder Videodaten zentral zuständig sind. Am Beispiel des Verstärkers 3 wird deutlich, daß dieser eine AC-3-Decoder 6-3 sowohl die komprimierten Audiodaten von dem DVD-Player 2 wie auch von dem Autoradio 1 decodiert und diese decodierten Audiodaten im folgenden mittels der Lautsprecher 9 wiedergegeben werden. Durch diese Zentralisierung und Zuordnung der Bit-Stream-Decoder 6-3, 6-4 zu den Datensenken kann die Anzahl der Decoder wesentlich reduziert werden, wodurch einerseits die Kosten eines derartigen Netzwerkes bereits bei einer kleinen Anzahl von Teilnehmern merklich gesenkt werden kann. Bei größeren Teilnehmerzahlen insbesondere bei steigender Anzahl von Datenquellen 1, 2 wird der erzielbare Kostenvorteil kontinuierlich größer.

Darüber hinaus zeigt dieses lokale Netzwerk die Möglichkeit, die maximale Übertragungskapazität der optischen Datenleitung 5 wesentlich effizienter auszunutzen, indem nun wesentlich mehr parallele Datenkanäle zeitgleich übertragen werden können. Durch diese Kombination einer Verbesserung der Übertragungseffizienz bei merklicher Kostenreduktion ist ein besonderes vorteilhaftes lokales Netzwerk geschaffen.

Ein solches Netzwerk ist besonders geeignet für ein Einsatz im Automobil, da es dort in besonderem Maße auf die MV-Verträglichkeit (optische Datenleitung 5), auf einfache Installation (eine einzige Datenleitung 5), auf sehr niedrige Kosten (Reduktion der notwendigen Bit-Stream-Decoder) bei gleicher oder erhöhter Leistungsfähigkeit des Netzes ankommt. Diese erhöhte Leistungsfähigkeit wird besonders deutlich bei der gleichzeitigen Übertragung von mehreren Videodatenkanälen, denn diese zeigen enorme Datenmengen. Es ist auch zu beachten, daß gerade Videoanwendungen im Automobil immer mehr Einzug nehmen und daher ein besonderes Augenmerk auf die Übertragungseffizienz bei ausreichender Sicherheit für den automobilen Einsatz gegeben sein muß.

### Bezugszeichenliste

- 1: Teilnehmer, Datenquelle, Autoradio
- 2: Teilnehmer, Datenquelle, DVD-Player
- 3: Teilnehmer, Datensenke, Verstärker
- 4: Teilnehmer, Datensenke, Bildschirmeinheit
- 4-1: Interface
- 4-2: Interface
- 4-3: Interface
- 4-4: Interface
- 5: optische Datenleitung
- 6-3: AC3-Decoder des Verstärkers 3
- 6-4: Bit-Stream-Decoder der Bildschirmeinheit 4
- 7: Steuerung
- 8: Bildschirm
- 9: Lautsprecher
- 10: AC-3-Encoder

## Patentansprüche

1. Ringförmiges, lokales Netzwerk mit einer optischen Datenleitung (5), an die mehrere voneinander unabhängige Datenquellen (1, 2) zur Ausgabe von Audiodaten und/oder Videodaten und mindestens eine Datensenke (3, 4) zum Empfang der übertragenen Audio-und/oder Videodaten angeschlossen sind, sowie mit Bit-Stream-Decodern (6-3, 6-4),
**dadurch gekennzeichnet, dass** mehr Datenquellen (1, 2) als Datensenken (3, 4) an das Netzwerk angeschlossen sind, dass die Audio und/oder video daten von der oder den Datenquellen (1, 2) als komprimierte Daten auf die Datenleitung (5) übertragen werden, und dass ausschließlich in den Datensenken (3, 4) jeweils ein einziger Bit-Stream-Decoder (6-3, 6-4) zur Dekomprimierung der von den Datenquellen (1, 2) ausgesandten, komprimierten Daten enthalten ist, wobei dieser Bit-Stream-Decoder (6-3, 6-4) mittels übertragener Steuerdaten zwischen verschiedenen Kompressionsformaten unschaltbar ist.

2. Lokales Netzwerk nach Anspruch 1, **dadurch gekennzeichnet, dass** die Datensenke (3, 4) mit dem Bit-Stream-Decoder (6-3, 6-4) von den Datenquellen (1, 2) getrennt und über die optische Datenleitung (5) verbunden ausgebildet ist.

3. Lokales Netzwerk nach Anspruch 1 oder 2, **dadurch gekennzeichnet, dass** eine Steuerung (7) vorgesehen ist, die die Datenverbindung zwischen einer Datenquelle (1, 2) für komprimierte Audio- und/oder Videodaten und der Datensenke (3, 4) mit dem Bit-Stream-Decoder (6-3, 6-4) steuert.

4. Lokales Netzwerk nach einem der vorstehenden Ansprüche, **dadurch gekennzeichnet, dass** der Bit-Stream-Decoder (6-3, 6-4) ein MPEG-1-Decoder, ein MPEG-2-Decoder, ein AC-3-Decoder und/oder ein JPEG-Decoder ist.

5. Lokales Netzwerk nach einem der vorstehenden Ansprüche, **dadurch gekennzeichnet, dass** der Bit-Stream-Decoder (6-4) mittels übertragener Steuerdaten als MPEG-1-Decoder, als MPEG-2-Decoder oder als JPEG-Decoder umschaltbar ist.

## Claims

1. A ring-shaped, local network with an optical data line (5) to which a number of independently operating data sources (1, 2) are connected for output of audio and/or video data, and to which at least one data sink (3, 4) is connected for reception of the transferred audio and/or video data, and which also includes bit-stream decoders (6-3, 6-4), **characterised in that** more data sources (1, 2) than data sinks (3, 4) are connected to the network: that the audio and/or video data is transferred from the data source or sources (1, 2) in compressed format over the data line (5); and that only the data sinks (3, 4) include each a single bit-stream decoder (6-3, 6-4) for decompressing the compressed data sent by the data source or sources (1, 2), where each bit-stream decoder (6-3, 6-4) can be switched by means of transmitted control data to handle different compression formats.

2. The local network of Claim 1, **characterised in that** the data sink (3, 4) with the bit-stream decoder (6-3, 6-4) is connected separately with the data sources (1, 2) by the optical data line (5).

3. The local network of Claim 1 or 2, **characterised in that** a control unit (7) is provided for control of the data connection carrying compressed audio and/or video data between a data source (1, 2) and a data sink (3, 4) with a bit-stream decoder (6-3, 6-4).

4. The local network as of one of the above claims, wherein the bit-stream decoder (6-3, 6-4) decodes MPEG-1, MPEG-2, AC-3 and/or JPEG formats.

5. The local network of one of the above claims, wherein the bit-stream decoder (6-4) can be configured by means of transmitted control data to operate as an MPEG-1, MPEG-2 or JPEG decoder.

## Revendications

1. Réseau local annulaire comprenant une ligne de données optique (5) à laquelle sont connectées plusieurs sources de données (1, 2) indépendantes les unes des autres, destinées à émettre des données audio et/ou des données vidéo, et au moins un collecteur de données (3, 4) destiné à recevoir les données audio et/ou vidéo transmises, ainsi que des décodeurs de trains de bits (6-3, 6-4),
**caractérisé en ce qu'**
un plus grand nombre de sources de données (1, 2) que de collecteurs de données (3, 4) sont connectés au réseau, les données audio et/ou vidéo sont transmises de la ou des source(s) de données (1, 2) à la ligne de données (5) sous la forme de données comprimées et, exclusivement dans les collecteurs de données (3, 4), est contenu à chaque fois un unique décodeur de trains de bits (6-3, 6-4) pour la décompression des données comprimées envoyées par les sources de données (1, 2), ce décodeur de trains de bits (6-3, 6-4) pouvant être commuté entre différents formats de compression au moyen de données de commande transmises.

2. Réseau local selon la revendication 1,
**caractérisé en ce que**
le collecteur de données (3, 4) comprenant le décodeur de trains de bits (6-3, 6-4) est réalisé séparément des sources de données (1, 2) et y est connecté par la ligne de données optique (5).

3. Réseau local selon la revendication 1 ou 2,
**caractérisé en ce qu'**
une commande (7) contrôle la communication de données entre d'une part une source de données (1, 2) pour données audio et/ou vidéo comprimées et d'autre part le collecteur de données (3, 4) comprenant le décodeur de trains de bits (6-3, 6-4).

4. Réseau local selon une des revendications précédentes,
**caractérisé en ce que**
le décodeur de trains de bits (6-3, 6-4) est un décodeur MPEG-1, un décideur MPEG-2, un décodeur AC-3 et/ou un décodeur JPEG.

5. Réseau local selon une des revendications précédentes,
**caractérisé en ce que**
le décodeur de trains de bits (6-4) peut être commuté en décodeur MPEG-1, décodeur MPEG-2, décodeur AC-3 ou en décodeur JPEG au moyen de données de commande transmises.
